(19)

Europäisches
Patentamt
European
Patent Office
Office européen
des brevets

(11) **EP 1 950 461 A2**

(12) **EUROPEAN PATENT APPLICATION**

(43) Date of publication:
**30.07.2008 Bulletin 2008/31**

(51) Int Cl.:
*F16H 61/02* [(2006.01)]     *F16D 48/00* [(2006.01)]

(21) Application number: **08250299.8**

(22) Date of filing: **24.01.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **29.01.2007 JP 2007017661**

(71) Applicant: **TOYOTA JIDOSHA KABUSHIKI KAISHA**
**Aichi-ken, 471-8571 (JP)**

(72) Inventors:
 • **Kuge, Satoshi**
  **Aichi-ken 471-8571 (JP)**
 • **Watanabe, Hideo**
  **Aichi-ken 471-8571 (JP)**
 • **Nagasaka, Yasumitsu**
  **Aichi-ken 471-8571 (JP)**

(74) Representative: **Albutt, Anthony John**
 **D Young & Co**
 **120 Holborn**
 **London EC1N 2DY (GB)**

(54) **Clutch engaged state determination apparatus and method thereof, gear determination apparatus and shift indication apparatus**

(57)     An engine ECU (22) determines that a clutch (4) is engaged, when it remains determined, for a reference time, that a ratio between an actual engine speed and an actual rotational speed of a drive system or an actual physical quantity is substantially equivalent to a pre-calculated ratio at one of gears.

FIG. 2

EP 1 950 461 A2

**Description**

BACKGROUND OF THE INVENTION

1. Field of the Invention

The invention relates to a clutch engaged state determination apparatus and method that determines whether a clutch is engaged, wherein the clutch is disposed between an engine and a drive system including a transmission, and allows/interrupts transmission of power between the engine and the drive system. The invention also relates to a gear determination apparatus using the clutch engaged state determination apparatus, and a shift indication apparatus using the gear determination apparatus.

2. Description of the Related Art

In a vehicle that includes a gear type manual transmission, a clutch pedal is provided. When a gear shift operation is performed while a vehicle is traveling, an accelerator pedal is released, and the clutch pedal is depressed, and then necessary gear shift operation is performed. The clutch pedal is provided with a clutch switch or a stroke sensor. Thus, an electronic control unit determines whether a clutch is engaged by referring to an output from the clutch switch or the stroke sensor, and executes various controls based on the determination (for example, refer to Japanese Patent Application Publication No. 2002-266895 (JP-A-2002-266895), and Japanese Patent Application Publication No. 2003-278806 (JP-A-2003-278806)).

Japanese Patent Application Publication No. 2005-195170 (JP-A-2005-195170) describes the technology in which it is determined whether a clutch is engaged based on a change in an engine speed, without using the clutch switch required in the technology described in the publication No. 2002-266895 or the stroke sensor required in the technology described in the publication No. 2003-278806.

However, in the determination method described in the publication No. 2005-195170, because it is determined whether the clutch is engaged based on the change in the engine speed caused by a change in the state of the clutch, it is not possible to determine whether the clutch is engaged unless the clutch operation is changed. Accordingly, it is not possible to continuously determine whether the clutch is engaged. Thus, it is desired to continuously determine whether the clutch is engaged without using the clutch switch or the stroke sensor. according to another method.

SUMMARY OF THE INVENTION

The invention provides a clutch engaged state determination apparatus and method that continuously determines whether a clutch is engaged without using a clutch switch or a stroke sensor. The invention also provides a gear determination apparatus that accurately determines a current gear of a transmission at an appropriate timing using the clutch engaged state determination apparatus, and a shift indication apparatus that provides appropriate indication regarding shift, using the gear determination apparatus.

A first aspect of the invention relates to a clutch engaged state determination apparatus that determines whether a clutch is engaged, wherein the clutch is disposed between an engine and a drive system including a transmission, and allows/interrupts transmission of power between the engine and the drive system. The clutch engaged state determination apparatus includes engine speed detection means for detecting an actual engine speed of the engine; drive system rotational state detection means for detecting an actual rotational speed of the drive system at an output side of the transmission, or an actual physical quantity associated with the actual rotational speed; and clutch engaged state determination means for determining whether the clutch is engaged, based on the actual engine speed detected by the engine speed detection means, and the actual rotational speed of the drive system or the actual physical quantity detected by the drive system rotational state detection means.

In the first aspect, the clutch engaged state determination apparatus may further include equivalent ratio determination means for determining a pre-calculated ratio between an engine speed and a rotational speed of the drive system at the output side of the transmission or a physical quantity associated with the rotational speed at one of gears of the transmission, which is substantially equivalent to a ratio between the actual engine speed detected by the engine speed detection means and the actual rotational speed of the drive system or the actual physical quantity detected by the drive system rotational state detection means, among pre-calculated ratios between engine speeds and rotational speeds of the drive system or physical quantities associated with the rotational speeds at the respective gears of the transmission. The clutch engaged state determination means may determine that the clutch is engaged, when the equivalent ratio determination means continues to determine, for a first reference time, that the ratio between the actual engine speed and the actual rotational speed or the actual physical quantity is substantially equivalent to the pre-calculated ratio at the one of the gears.

When the clutch is engaged, the ratio between the engine speed and the rotational speed of the drive system or the physical quantity associated with the rotational speed at each gear remains in a corresponding range for a certain time. If the ratio between the engine speed and the rotational speed of the drive system or the physical quantity does not remain in the corresponding range for a certain time, it can be determined that the clutch is not engaged.

Accordingly, the clutch engaged state determination means determines that the clutch is engaged, when the equivalent ratio determination means continues to determine, for the first reference time, that the ratio between the actual engine speed and the actual rotational speed or the actual physical quantity is substantially equivalent to the pre-calculated ratio at the one of the gears.

Thus, it is possible to continuously determine whether the clutch is engaged, without using a clutch switch or a stroke sensor.

In the above-described configuration, the clutch engaged state determination apparatus may further include per-unit-time change determination means for determining whether an amount of change in the actual rotational speed of the drive system or the actual physical quantity detected by the drive system rotational state detection means per unit time is changed according to an amount of change in the actual engine speed detected by the engine speed detection means per unit time. The clutch engaged state determination means may determine that the clutch is engaged, when the equivalent ratio determination means continues to determine, for the first reference time, that the ratio between the actual engine speed and the actual rotational speed or the actual physical quantity is substantially equivalent to the pre-calculated ratio at the one of the gears, and the per-unit-time change determination means continues to determine, for a second reference time, that the amount of change in the actual rotational speed of the drive system or the actual physical quantity per unit time is changed according to the amount of change in the actual engine speed per unit time.

When the clutch is engaged, the amount of change in the actual rotational speed of the drive system or the actual physical quantity per unit time is changed according to the amount of change in the actual engine speed per unit time for a certain time. Accordingly, the clutch engaged state determination means determines that the clutch is engaged, when the equivalent ratio determination means continues to make the above-described determination regarding the ratio for the first reference time, and further, the per-unit-time change determination means continues to determine, for the second reference time, that the amount of change in the actual rotational speed of the drive system or the actual physical quantity per unit time is changed according to the amount of change in the actual engine speed per unit time.

Thus, it is possible to continuously and more accurately determine whether the clutch is engaged, without using a clutch switch or a stroke sensor.

In the above-described configuration, the clutch engaged state determination apparatus may further include engine output state determination means for determining whether estimated engine output torque, which is calculated based on the amount of change in the actual engine speed detected by the engine speed detection means per unit time on an assumption that engine output torque is not transmitted to the drive system, is far from actual output torque that is actually generated by the engine. The clutch engaged state determination means may determine that the clutch is engaged, when the equivalent ratio determination means continues to determine, for the first reference time, that the ratio between the actual engine speed and the actual rotational speed or the actual physical quantity is substantially equivalent to the pre-calculated ratio at the one of the gears, and the per-unit-time change determination means continues to determine, for the second reference time, that the amount of change in the actual rotational speed of the drive system or the actual physical quantity per unit time is changed according to the amount of change in the actual engine speed per unit time, and the engine output state determination means continues to determine, for a third reference time, that the estimated engine output torque is far from the actual output torque.

When the clutch is engaged, the estimated engine output torque remains far from the actual output torque for a certain time. Accordingly, the clutch engaged state determination means determines that the clutch is engaged, when the equivalent ratio determination means continues to make the above-described determination regarding the ratio for the first reference time, and the per-unit-time change determination means continues to make the above-described determination regarding the change per unit time for the second reference time, and further, the engine output state determination means continues to determine, for the third reference time, that the estimated engine output torque is far from the actual output torque.

Thus, it is possible to continuously and more accurately determine whether the clutch is engaged, without using a clutch switch or a stroke sensor.

In the above-described configuration, the clutch engaged state determination apparatus may further include engine output state determination means for determining whether estimated engine output torque, which is calculated based on the amount of change in the actual engine speed detected by the engine speed detection means per unit time on an assumption that engine output torque is not transmitted to the drive system, is far from actual output torque that is actually generated by the engine. The clutch engaged state determination means may determine that the clutch is engaged, when the equivalent ratio determination means continues to determine, for the first reference time, that the ratio between the actual engine speed and the actual rotational speed or the actual physical quantity is substantially equivalent to the pre-calculated ratio at the one of the gears, and the engine output state determination means continues to determine, for a third reference time, that the estimated engine output torque is far from the actual output torque.

The clutch engaged state determination means determines that the clutch is engaged, when the equivalent ratio determination means continues to make the above-described determination regarding the ratio for the first reference time, and further, the engine output state determination means continues to determine, for a third reference time, that the estimated engine output torque is far from the actual output torque.

Thus, it is possible to continuously and more accurately determine whether the clutch is engaged, without using a clutch switch or a stroke sensor.

In the above-described aspect, the clutch engaged state determination apparatus may further include per-unit-time change determination means for determining whether an amount of change in the actual rotational speed of the drive system or the actual physical quantity detected by the drive system rotational state detection means per unit time is changed according to an amount of change in the actual engine speed detected by the engine speed detection means per unit time. The clutch engaged state determination means may determine that the clutch is engaged, when the per-unit-time change determination means continues to determine, for a second reference time, that the amount of change in the actual rotational speed of the drive system or the actual physical quantity per unit time is changed according to the amount of change in the actual engine speed per unit time.

The clutch engaged state determination means determines that the clutch is engaged, when the per-unit-time change determination means continues to determine, for the second reference time, that the amount of change in the actual rotational speed of the drive system or the actual physical quantity per unit time is changed according to the amount of change in the actual engine speed per unit time.

Thus, it is possible to continuously determine whether the clutch is engaged, without using a clutch switch or a stroke sensor.

In the above-described configuration, the clutch engaged state determination apparatus may further include engine output state determination means for determining whether estimated engine output torque, which is calculated based on the amount of change in the actual engine speed detected by the engine speed detection means per unit time on an assumption that engine output torque is not transmitted to the drive system, is far from actual output torque that is actually generated by the engine. The clutch engaged state determination means may determine that the clutch is engaged, when the per-unit-time change determination means continues to determine, for the second reference time, that the amount of change in the actual rotational speed of the drive system or the actual physical quantity per unit time is changed according to the amount of change in the actual engine speed per unit time, and the engine output state determination means continues to determine, for a third reference time, that the estimated engine output torque is far from the actual output torque.

The clutch engaged state determination means determines that the clutch is engaged, when the per-unit-time change determination means continues to make the above-described determination regarding the change per unit time for the second reference time, and the engine output state determination means continues to determine, for the third reference time, that the estimated engine output torque is far from the actual output torque.

Thus, it is possible to continuously and more accurately determine whether the clutch is engaged, without using a clutch switch or a stroke sensor.

In the above-described configuration, the engine may be provided in a vehicle to drive the vehicle via the drive system. The drive system rotational state detection means may detect a traveling speed of the vehicle as the physical quantity.

Thus, the traveling speed of the vehicle may be detected as the physical quantity. A device that obtains data regarding the traveling speed of the vehicle is generally provided in the vehicle. Therefore, it is possible to determine whether the clutch is engaged, without separately providing a special detection device.

Accordingly, it is possible to continuously determine whether the clutch is engaged with the simpler device.

In the above-described configuration, the transmission may be a gear type manual transmission.

Particularly, in the gear type manual transmission, the driver operates the clutch so that the transmission shifts. In this case, it is possible to continuously determine whether the clutch is engaged, without using a clutch switch or a stroke sensor.

A second aspect of the invention relates to a gear determination apparatus. The gear determination apparatus includes the above-described clutch engaged state determination apparatus; and gear determination means for determining that a current gear of the transmission is the one of the gears corresponding to the pre-calculated ratio that is determined to be substantially equivalent to the ratio between the actual engine speed and the actual rotational speed or the actual physical quantity by the equivalent ratio determination means, when the clutch engaged state determination means of the clutch engaged state determination apparatus determines that the clutch is engaged.

Thus, the clutch engaged state determination apparatus continuously determines whether the clutch is engaged, without using a clutch switch or a stroke sensor. When it is determined that the clutch is engaged, it is possible to determine that the current gear is the one of the gear corresponding to the pre-calculated ratio that is determined to be substantially equivalent to the ratio between the actual engine speed and the actual rotational speed or the actual physical quantity.

Thus, it is possible to accurately determine the current gear at an appropriate timing, without using a clutch switch or a stroke sensor.

A third aspect of the invention relates to a gear determination apparatus. The gear determination apparatus includes the above-described clutch engaged state determination apparatus; equivalent ratio determination means for determining a pre-calculated ratio between an engine speed and a rotational speed of the drive system at the output side of the transmission or a physical quantity associated with the rotational speed at one of gears of the transmission, which is substantially equivalent to a ratio between the actual engine speed detected by the engine speed detection means and the actual rotational speed of the drive system or the actual physical quantity detected by the drive system rotational state detection means, among pre-calculated ratios between engine speeds and rotational speeds of the drive system or physical quantities associated with the rotational speeds at the respective gears of the transmission; and gear determination means for determining that a current gear of the transmission is the one of the gears corresponding to the pre-calculated ratio that is determined to be substantially equivalent to the ratio between the actual engine speed and the actual rotational speed or the actual physical quantity by the equivalent ratio determination means, when the clutch engaged state determination means of the clutch engaged state determination apparatus determines that the clutch is engaged.

Thus, the clutch engaged state determination apparatus continuously determines whether the clutch is engaged, without using a clutch switch or a stroke sensor. When it is determined that the clutch is engaged, it is possible to determine that the current gear is the one of the gears corresponding to the pre-calculated ratio that is determined to be substantially equivalent to the ratio between the actual engine speed and the actual rotational speed or the actual physical quantity by the equivalent ratio determination means.

Thus, it is possible to accurately determine the current gear at an appropriate timing, without using a clutch switch or a stroke sensor.

In the above-described configuration, the engine may be provided in a vehicle to drive the vehicle via the drive system. The drive system rotational state detection means may detect a traveling speed of the vehicle as the physical quantity.

Thus, the traveling speed of the vehicle may be detected as the physical quantity. A device that obtains data regarding the traveling speed of the vehicle is generally provided in the vehicle. Therefore, it is possible to determine whether the clutch is engaged, without separately providing a special detection device.

Accordingly, it is possible to continuously determine whether the clutch is engaged with the simpler device.

In the above-described configuration, the transmission may be a gear type manual transmission. Particularly, in the gear type manual transmission, the driver operates the clutch so that the transmission shifts. In this case, it is possible to continuously determine whether the clutch is engaged, without using a clutch switch or a stroke sensor. Thus, it is possible to accurately determine the current gear at an appropriate timing, without using a clutch switch or a stroke sensor.

A fourth aspect of the invention relates to a shift indication apparatus. The shift indication apparatus includes the above-described gear determination apparatus; an engine operating state detection means for detecting an operating state of the engine; a vehicle traveling state detection means for detecting a traveling state of a vehicle; shift necessity determination means for determining whether the transmission needs to shift, based on the current gear determined by the gear determination means, the operating state of the engine detected by the engine operating state detection means, and the traveling state of the vehicle detected by the vehicle traveling state detection means; and shift indication control means for executing a control to indicate that the transmission needs to shift, when the shift necessity determination means determines that the transmission needs to shift.

When the current gear determined by the gear determination means is not appropriate for the operating state of the engine and the traveling state of the vehicle, the shift necessity determination means determines that the transmission needs to shift. In this case, the shift indication control means executes the control to indicate that the transmission needs to shift. Thus, it is possible to provide appropriate indication regarding the shift to the driver.

A fifth aspect of the invention relates to a clutch engaged state determination method that determines whether a clutch is engaged, wherein the clutch is disposed between an engine and a drive system including a transmission, and allows/interrupts transmission of power between the engine and the drive system. The clutch engaged state determination method includes detecting an actual engine speed of the engine; detecting an actual rotational speed of the drive system at an output side of the transmission, or a physical quantity associated with the actual rotational speed; and determining whether the clutch is engaged, based on the detected actual engine speed, and the detected actual rotational speed of the drive system or the detected actual physical quantity.

BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:

FIG. 1 is a system configuration diagram showing a vehicle internal combustion engine and a control apparatus thereof according to a first embodiment of the invention;

FIG. 2 is a flowchart of a clutch engaged state determination process A executed by an engine ECU according to the first embodiment of the invention;

FIG. 3 is a flowchart of a clutch engaged state determination process B executed by the engine ECU according to the first embodiment of the invention;

FIG. 4 is a flowchart of a clutch engaged state determination process C executed by the engine ECU according to the first embodiment of the invention;

FIG. 5 is a flowchart of a gear determination process executed by the engine ECU according to the first embodiment of the invention;

FIG. 6 is a flowchart of a shift indication process executed by the engine ECU according to the first embodiment of the invention;

FIG. 7 is a diagram illustrating the configuration of a map MAPx used in the gear determination process executed by the engine ECU according to the first embodiment of the invention;

FIG. 8 is a timing chart showing an example of the control according to the first embodiment of the invention;

FIG 9 is a flowchart of a gear determination process executed by the engine ECU according to a second embodiment of the invention;

FIG. 10 is a flowchart of a shift indication process executed by the engine ECU according to the second embodiment of the invention;

FIG. 11 is a flowchart of a gear determination process executed by the engine ECU according to a third embodiment of the invention; and

FIG. 12 is a flowchart of a shift indication process executed by the engine ECU according to the third embodiment of the invention.

## DETAILED DESCRIPTION OF EMBODIMENTS

[First embodiment]

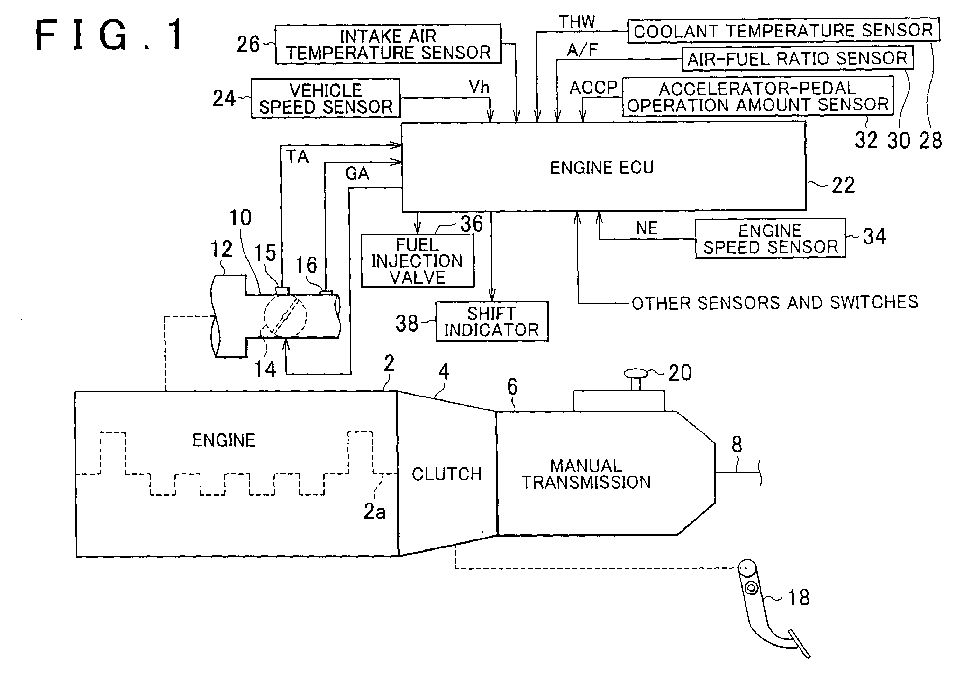

FIG. 1 is a system configuration diagram showing a vehicle internal combustion engine and a control device thereof, to which a clutch engaged state determination apparatus according to each of first to third embodiments of the invention is applied. As the internal combustion engine, a gasoline engine (hereinafter, simply referred to as "engine") 2 is used. However, other drive power sources, such as a diesel engine and a hybrid engine, may be used.

Output from the engine 2 is transmitted from a crankshaft 2a to an output shaft 8 via a clutch 4 and a gear type manual transmission 6 (hereinafter, simply referred to as "manual transmission"). Then, the output from the engine 2 is finally transmitted to drive wheels. Intake air is supplied to a combustion chamber of the engine 2 via an intake pipe 10, and a surge tank 12. An electric throttle valve 14 adjusts the amount of intake air. A throttle-valve opening amount sensor 15 (that is regarded as the engine operating state detection means) detects an actual throttle-valve opening amount TA, and an intake air amount sensor 16 detects an actual intake air amount GA. The clutch 4 allows/interrupts the transmission of power between the engine 2 and a drive system (including components from the manual transmission 6 to the drive wheels) according to driver's operation of a clutch pedal 18. The manual transmission 6 is provided with a shift lever 20. When the driver operates the shift lever 20, the manual transmission 6 shifts.

An engine ECU 22 is provided to control the engine 2. The engine ECU 22 controls the operation of the engine 2 according to driver's operation for a vehicle, and the state of the vehicle. The ECU 22 mainly includes a microcomputer that includes a CPU, ROM, RAM, and the like. The CPU performs necessary computations according to programs written in the ROM, and executes various controls based on the results of the computations.

The engine ECU 22 receives a signal indicating the throttle-valve opening amount TA from the throttle-valve opening amount sensor 15, a signal indicating the intake air amount GA from the intake air amount sensor 16, a signal indicating a vehicle speed Vh (that is regarded as the traveling speed of the vehicle) from a vehicle speed sensor 24 (that is regarded as the drive system rotational state detection means, and the vehicle traveling state detection means), a signal indicating the temperature of intake air from an intake air temperature sensor 26, and a signal indicating the temperature THW of coolant for the engine 2 from a coolant temperature sensor 28. Further, the engine ECU 22 receives a signal indicating an air-fuel ratio A/F from an air-fuel ratio sensor 30 provided in an exhaust system, and a signal indicating an accelerator-pedal operation amount ACCP from an accelerator-pedal operation amount sensor 32 provided in the accelerator pedal. Further, the engine ECU 22 receives a signal indicating an engine speed NE from an engine speed sensor 34 (that is regarded as the engine speed detection means) that detects the rotational speed of the crankshaft 2a, and various detection signals from other sensors. On the basis of these detection signals, the engine ECU 22 drives the throttle valve 14 and a fuel injection valve 36, thereby supplying the required amount of intake air and the required amount of fuel to the combustion chamber of the engine 2.

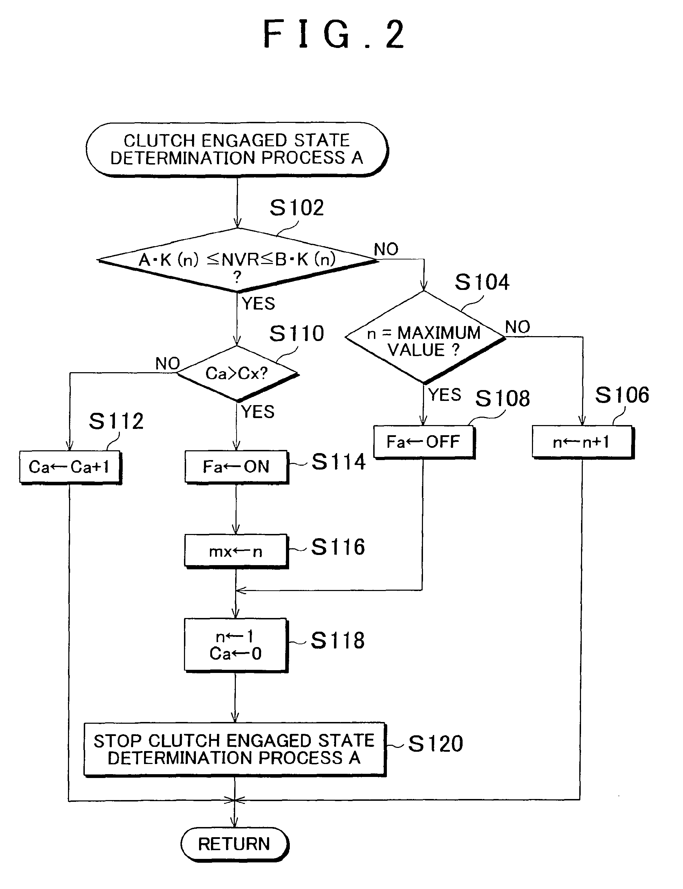

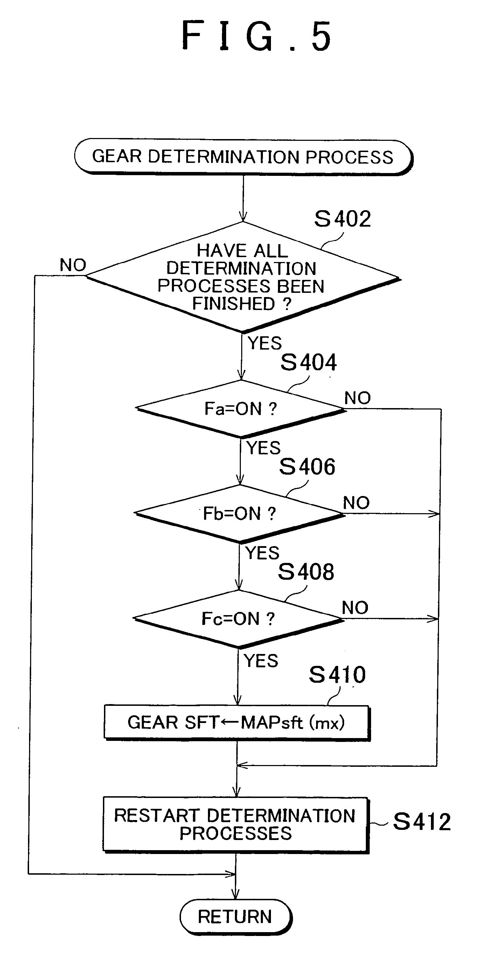

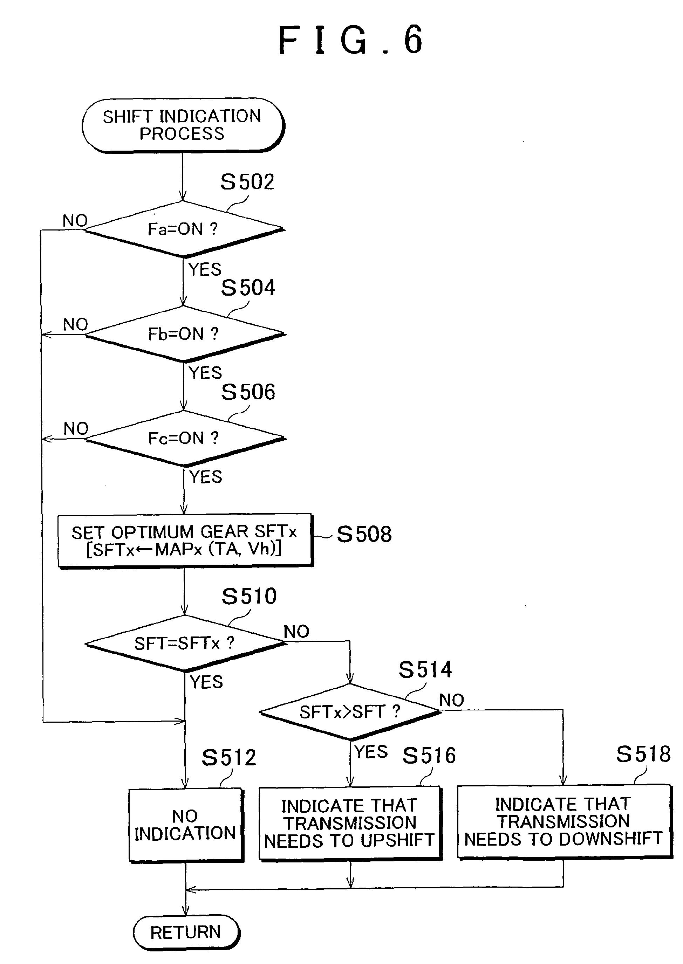

Further, the engine ECU 22 determines whether the clutch 4 is engaged, by executing clutch engaged state determination processes A, B, and C (FIG. 2 to FIG. 4) described later. Also, the engine ECU 22 determines the current gear of the manual transmission 6, by executing a gear determination process (FIG. 5). Also, the engine ECU 22 controls the indication state of the shift indicator 38, by executing a shift indication process (FIG. 6). The shift indicator 38 is configured as an indicating device that indicates an appropriate gear to provide instruction on the appropriate gear to the driver, according to an instruction provided by the engine ECU 22.

Next, the clutch engaged state determination processes A, B, and C (FIG. 2 to FIG 4), the gear determination process (FIG. 5), and the shift indication process (FIG. 6) will be described based on flowcharts. Each of the processes is executed as an interrupt at predetermined time intervals. A step number, which indicates each step of the flowcharts, will be preceded by "S".

The clutch engaged state determination process A (FIG. 2) will be described. When this process is started, the engine ECU 22 determines whether a ratio NVR (NE/Vh), which is the ratio of the engine speed NE detected by the engine speed sensor 34 to the vehicle speed Vh detected by the vehicle speed sensor 24. is in a range represented by the equation 1, as compared to a ratio K (n) that is the ratio of an engine speed to a vehicle speed at a gear indicated by the value of a gear counter n (S102).

$$[\text{Equation 1}] \quad A \cdot K(n) \le NVR \le B \cdot K(n)$$

The gear counter n is set to 1 by default when the engine ECU 22 is started. The coefficients A and B are used to indicate that the actual ratio NVR is close to the ratio K (n). The coefficient A is set to a value that is slightly smaller than 1, for example, 0.8. The coefficient B is set to a value that is slightly larger than 1, for example, 1.2.

When the equation 1 is unsatisfied (NO in S102), the engine ECU 22 determines whether the value of the gear counter n is the maximum value (S104). That is, it is determined whether the engine ECU 22 has finished checking whether the equation 1 is satisfied at each of all the gears at which the checking needs to be performed.

When the value of the gear counter n is not the maximum value (NO in S104), the engine ECU 22 increments the gear counter n (S106), and finishes the clutch engaged state determination process A (FIG. 2). Then, the engine ECU 22 determines whether the equation I is satisfied based on the gear counter n that is incremented (S102). In this case as well, when the equation 1 is unsatisfied (NO in S102), the gear counter n is incremented (S106), and it is determined whether the equation 1 is satisfied (S 102). The increment of the gear counter n (S106) and the determination as to whether the equation I is satisfied (S102) are repeated as long as the gear counter n is not the maximum value (NO in S104). If the manual transmission 6 has five gears, the gear counter n is set to 1 to 5 (a reverse gear is excluded).

Thus, when the engine ECU 22 increments the gear counter n (S106), and determines that the equation 1 is unsatisfied at all the values of the gear counter n (NO in S102), the value of the gear counter n is the maximum value (in this case, 5). When the value of the gear counter n is the maximum value (YES in S104), the engine ECU 22 turns a first gear determination flag Fa OFF (S108). Then, the engine ECU 22 resets the gear counter n to 1 that is a default value, and sets a first elapsed time counter Ca, which will be described later, to 0 (S118). The first elapsed time counter Ca is set to 0 by default when the engine ECU 22 is started.

Then, the engine ECU 22 stops the clutch engaged state determination process A (S120). Thus, the clutch engaged state determination process A is stopped until the clutch engaged state determination process A is restarted by the gear determination process (FIG. 5) that will be described later.

When the equation 1 is satisfied at one of the values of the gear counter n (YES in S102), the engine ECU 22 determines whether the value of the first elapsed time counter Ca is above the value of a reference time Cx (for example, the reference time Cx is set to a count value equivalent to one second) (S110). In the initial stage of the period in which the equation 1 is satisfied, the value of the first elapsed counter Ca is 0 (NO in S110). Therefore, the engine ECU 22 increments the first elapsed time counter Ca (S112). Thus, the engine ECU 22 determines whether the equation 1 is satisfied (S102) in the next control cycle. In the next control cycle as well, when the equation 1 is satisfied (YES in S102) again, the engine ECU 22 determines whether the value of the first elapsed time counter Ca is above the value of the reference time Cx (Ca > Cx) (S110). When the value of the first elapsed time counter Ca remains equal to or below the value of the reference time Cx (Ca ≤ Cx) (NO in S110), the engine ECU 22 increments the first elapsed time counter Ca (S 112), and determines whether the equation 1 is satisfied, again (S102). When these steps are repeated, and the equation 1 is unsatisfied (NO in S102) in the period in which the value of the first elapsed time counter Ca is equal to or below the value of the reference time Cx (Ca ≤ Cx) (NO in S110), the engine ECU 22 determines whether the value of the gear counter n is the maximum value (S104). When the value of the gear counter n is not the maximum value (NO in S104), the engine ECU 22 increments the gear counter n (S 106), and then, determines whether the equation 1 is satisfied based on the gear counter n that is incremented (S102), in the next control cycle.

In the case where it is determined that the equation I is unsatisfied based on the gear counter n (NO in S102) thereafter, or in the case where it is temporarily determined that the equation 1 is satisfied (YES in S102), but the equation I does not remain satisfied for a time longer than the reference time Cx thereafter, finally, steps S108, S118, and S120 are executed as described above. That is, the first gear determination flag Fa is turned OFF, and the clutch engaged state determination process A is stopped.

In the case where the equation I is satisfied at one of the values of the gear counter n (YES in S102), and the equation 1 remains satisfied for a time longer than the reference time Cx (YES in S110), the engine ECU 22 turns the first gear determination flag Fa ON (S114). Further, the engine ECU 22 stores the value of the gear counter n at this time in a gear counter storage value mx (S116). Then, the engine ECU 22 resets the gear counter n to 1 that is the default value, and sets the first elapsed time counter Ca to 0 (S118). Further, the engine ECU 22 stops the clutch engaged state determination process A (FIG. 2) (S 120).

Thus, in the clutch engaged state determination process A (FIG. 2), it is determined whether the clutch 4 is engaged based on the equation 1. When it is determined that the clutch 4 is engaged, the first gear determination flag Fa is turned ON. When it is determined that the clutch 4 is not engaged, the first gear determination flag Fa is turned OFF.

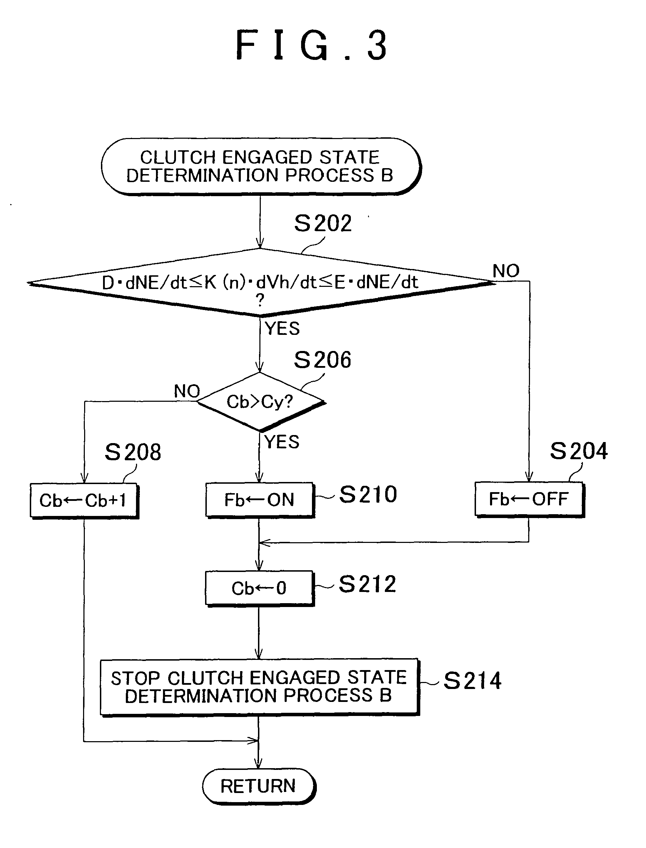

The clutch engaged state determination process B (FIG. 3) will be described. When this process is started, first, the engine ECU 22 determines whether the equation 2 is satisfied (S202).

$$[\text{Equation 2}] \quad D \cdot dNE / dt \leq K\,(n) \cdot dVh / dt \leq E \cdot dNE / dt$$

In this equation 2, dNE / dt represents the amount of change in the engine speed NE per unit time, dVh / dt represents the amount of change in the vehicle speed Vh per unit time. K (n) · dVh / dt represents the amount of change in the engine speed NE per unit time, which is calculated based on the vehicle speed Vh.

The coefficients D and E are used to indicate that K (n) · dVh / dt is close to dNE / dt. The coefficient D is set to a value that is slightly smaller than 1, for example, 0.8. The coefficient E is set to a value that is slightly larger than 1, for example, 1.2.

When the equation 2 is unsatisfied (NO in S202), the engine ECU 22 turns the second gear determination flag Fb OFF (S204), and sets a second elapsed time counter Cb to 0 (S212). The second elapsed time counter Cb is set to 0 by default when the engine ECU 22 is started.

Then, the engine ECU 22 stops the clutch engaged state determination process B (S214). Thus, the clutch engaged state determination process B (FIG. 3) is stopped until the clutch engaged state determination process B is restarted by the gear determination process (FIG. 5) described later.

When the equation 2 is satisfied (YES in S202), the engine ECU 22 determines whether the value of the second elapsed time counter Cb is above the value of a reference time Cy (for example, the reference time Cy is set to a count value equivalent to one second. In this case, the value of the reference time Cy is the same as the value of the reference time Cx) (S206). In the initial stage of the period in which the equation 2 is satisfied, the value of the second elapsed counter Cb is 0 (NO in S206). Therefore, the engine ECU 22 increments the second elapsed time counter Cb (S208). Thus, the engine ECU 22 determines whether the equation 2 is satisfied (S202) in the next control cycle. When the equation 2 is satisfied again (YES in S202), the engine ECU 22 determines whether the value of the second elapsed time counter Cb is above the value of the reference time Cy (Cb > Cy) (S206). When the value of the second elapsed time counter Cb remains equal to or below the value of the reference time Cy (Cb ≤ Cy) (NO in S206), the engine ECU 22 increments the second elapsed time counter Cb (S208), and determines whether the equation 2 is satisfied, again (S202). When these steps are repeated, and the equation 2 is unsatisfied (NO in step S202) in the period in which the value of the second elapsed time counter Cb is equal to or below the value of the reference time Cy (Cb ≤ Cy) (NO in S206), the engine ECU 22 executes steps S204, S212, and S214 as described above. That is, the second gear determination flag Fb is turned OFF. and the clutch engaged state determination process B is stopped.

When the equation 2 is satisfied (YES in S202), and remains satisfied for a time longer than the reference time Cy (YES in S206), the engine ECU 22 turns the second gear determination flag Fb ON (S210). Then, the engine ECU 22 sets the second elapsed time counter Cb to 0 (S212), and stops the clutch engaged state determination process B (FIG. 3) (S214).

Thus, in the clutch engaged state determination process B (FIG. 3), it is determined whether the clutch 4 is engaged based on the equation 2. When it is determined that the clutch 4 is engaged, the second gear determination flag Fb is turned ON. When it is determined that the clutch 4 is not engaged, the second gear determination flag Fb is turned OFF.

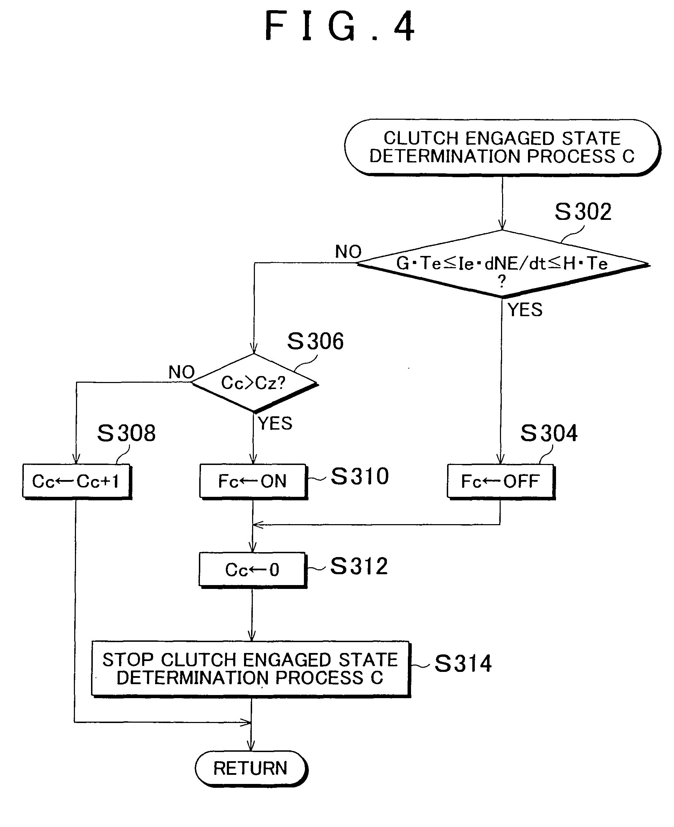

The clutch engaged state determination process C (FIG. 4) will be described. When this process is started, first, the engine ECU 22 determines whether the equation 3 is satisfied (S302).

$$[\text{Equation 3}] \qquad G \cdot Te \leq Ie \cdot dNE / dt \leq H \cdot Te$$

The output torque Te (that is regarded as the actual output torque) is an actual engine output value determined based on the state of combustion in the combustion chamber of the engine 2. The output torque Te is calculated based on, for example, the actual fuel injection amount, the actual engine speed NE, and the actual intake air amount GA, using a map or the like. $Ie \cdot dNE / dt$ represents a product of an engine inertia Ie and the amount of change in the engine speed NE per unit time $(dNE / dt)$. That is, $Ie \cdot dNE / dt$ represents an output torque value calculated based on a change in the engine speed NE (the output torque value is regarded as the estimated engine output torque).

The coefficients G and H are used to indicate that $Ie \cdot dNE / dt$ is far from the output torque Te. The coefficient G is set to a value that is smaller than 1, for example, 0.2. The coefficient H is set to a value that is larger than 1, for example, 5.

When the equation 3 is satisfied (YES in S302), the engine ECU 22 turns a third gear determination flag Fc OFF (S304), and sets a third elapsed time counter Cc to 0 (S312). The third elapsed time counter Cc is set to 0 by default when the engine ECU 22 is started.

Then, the engine ECU 22 stops the clutch engaged state determination process C (S314). Thus, the clutch engaged state determination process C (FIG. 4) is stopped until the clutch engaged state determination process C is restarted by the gear determination process (FIG. 5) described later.

When the equation 3 is unsatisfied (NO in S302), the engine ECU 22 determines whether the value of the third elapsed time counter Cc is above the value of a reference time Cz (for example, the value of the reference time Cz is set to a count value equivalent to one second. In this case, the value of the reference time Cz is the same as the value of the reference time Cx) (S306). In the initial stage of the period in which the equation 3 is unsatisfied, the value of the third elapsed counter Cc is 0 (NO in S306). Therefore, the engine ECU 22 increments the third elapsed time counter Cc (S308). Thus, the engine ECU 22 determines whether the equation 3 is satisfied (S302) in the next control cycle. When the equation 3 is unsatisfied again (NO in S302), the engine ECU 22 determines whether the value of the third elapsed time counter Cc is above the value of the reference time Cz (Cc > Cz) (S306). When the value of the third elapsed time counter Cc remains equal to or below the value of the reference time Cz (Cc $\leq$ Cz) (NO in S306), the engine ECU 22 increments the third elapsed time counter Cc (S308), and determines whether the equation 3 is satisfied, again (S302). When these steps are repeated, and the equation 3 is satisfied (YES in step S302) in the period in which the third elapsed time counter Cc is equal to or below the reference time Cz (Cc $\leq$ Cz) (NO in S306), the engine ECU 22 executes steps S304, S312, and S314 as described above. That is, the third gear determination flag Fc is turned OFF, and the clutch engaged state determination process C is stopped.

When the equation 3 is unsatisfied (NO in S302), and remains unsatisfied for a time longer than the reference time Cz (YES in S306), the engine ECU 22 turns the third gear determination flag Fc ON (S310). Then, the engine ECU 22 sets the third elapsed time counter Cc to 0 (S312), and stops the clutch engaged state determination process C (FIG. 4) (S314).

Thus, in the clutch engaged state determination process C (FIG. 4), it is determined whether the clutch 4 is engaged based on the equation 3. When it is determined that the clutch 4 is engaged, the third gear determination flag Fc is turned ON. When it is determined that the clutch 4 is not engaged, the third gear determination flag Fc is turned OFF.

The gear determination process (FIG. 5) will be described. In the gear determination process, the current gear of the manual transmission 6 is determined based on the results of determinations performed in the clutch engaged state determination processes A. B, and C (FIG. 2 to FIG. 4). When this process is started, first, the engine ECU 22 determines whether all the clutch engaged state determination processes A, B, and C (FIG. 2 to FIG. 4) have been finished, and thus stopped (S402). When at least one of the clutch engaged state determination processes A, B, and C has not been finished (NO in S402), the engine ECU 22 finishes the gear determination process.

When all the clutch engaged state determination processes A, B, and C (FIG. 2 to FIG. 4) have been finished (YES in S402), the states of the three gear determination flags Fa, Fb, and Fc are determined (S404, S406, S408).

When all the gear determination flags Fa, Fb, and Fc are ON (YES in S404, S406, and S408), the engine ECU 22 calculates a current gear SFT based on the value of the gear counter n stored in the gear counter storage value mx, using a map MAPsft that shows the correspondence relation between the gear counter n and the current gear SFT (S410). Thus, the determination of the current gear SFT is completed.

Then, the engine ECU 22 restarts the three clutch engaged state determination processes A, B, and C (FIG. 2 to FIG. 4) (S412). Thus, each of the clutch engaged state determination processes A, B, and C is executed.

When at least one of the three gear determination flags Fa, Fb, and Fc is OFF (No in S404, or NO in S406, or NO in S408), the engine ECU 22 restarts the three clutch engaged state determination processes A, B, and C (FIG. 2 to FIG. 4), without determining the current gear SFT (S412).

Thus, in the case where the equation I remains satisfied for a time longer than the reference time Cx, and the equation 2 remains satisfied for a time longer than the reference time Cy, and the equation 3 remains unsatisfied for a time longer than the reference time Cz, the current gear SFT is determined based on the value of the gear counter n when the equation 1 is satisfied.

The shift indication process (FIG. 6) will be described. In the shift indication process, the engine ECU 22 determines whether the current gear SFT is appropriate based on the operating state of the engine 2 and the traveling state of the vehicle. When the engine ECU 22 determines that the current gear SFT is not appropriate, that is, when the engine ECU 22 determines that the manual transmission 6 needs to shift, the engine ECU 22 makes the shift indicator 38 indicate that the manual transmission 6 needs to shift.

When the shift indication process (FIG. 6) is started, first, the engine ECU 22 determines the states of the three gear determination flags Fa, Fb, and Fc (S502. S504. and S506). When at least one of the three gear determination flags Fa, Fb, and Fc is OFF (NO in S502, or NO in S504, or NO in S506), the engine ECU 22 does not make the shift indicator 38 provide indication (S512).

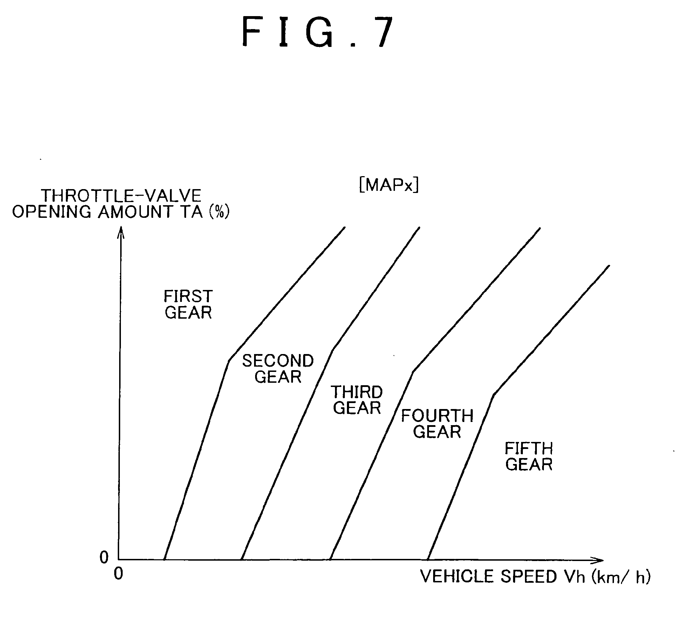

When all the three gear determination flags Fa, Fb, and Fc are ON (YES in S502, YES in S504, and YES in S506), the optimum gear SFTx is set (S508). The ECU 22 calculates the optimum gear SFTx based on the throttle-valve opening amount TA that indicates the operating state of the engine 2, and the vehicle speed Vh that indicates the traveling state of the vehicle, using a map MAPx. As the map MAPx, for example, a map shown in FIG. 7 is used.

Next, the engine ECU 22 determines whether the current gear SFT determined by the gear determination process (FIG. 5) matches the optimum gear SFTx (S510). When the current gear SFT matches the optimum gear SFTx (SFT = SFTx) (YES in S510), the engine ECU 22 does not make the gear indicator 38 provide indication (S512).

When the current gear SFT does not match the optimum gear SFTx (NO in S510), the engine ECU 22 determines whether the optimum gear SFTx is higher than the current gear SFT (S514). When the optimum gear SFTx is higher than the current gear SFT (YES in S514), the engine ECU 22 makes the shift indicator 38 indicate that the manual transmission 6 needs to upshift, using a lamp or a display provided in the shift indicator 38 (S516).

When the optimum gear SFTx is lower than the current gear SFT (NO in S514), the engine ECU 22 makes the shift indicator 38 indicate that the manual transmission 6 needs to downshift (S518). Accordingly, a driver maintains the current gear, or operates the shift lever 20 so that the manual transmission 6 upshifts or downshifts. Thus, the manual transmission 6 shifts to an appropriate gear.

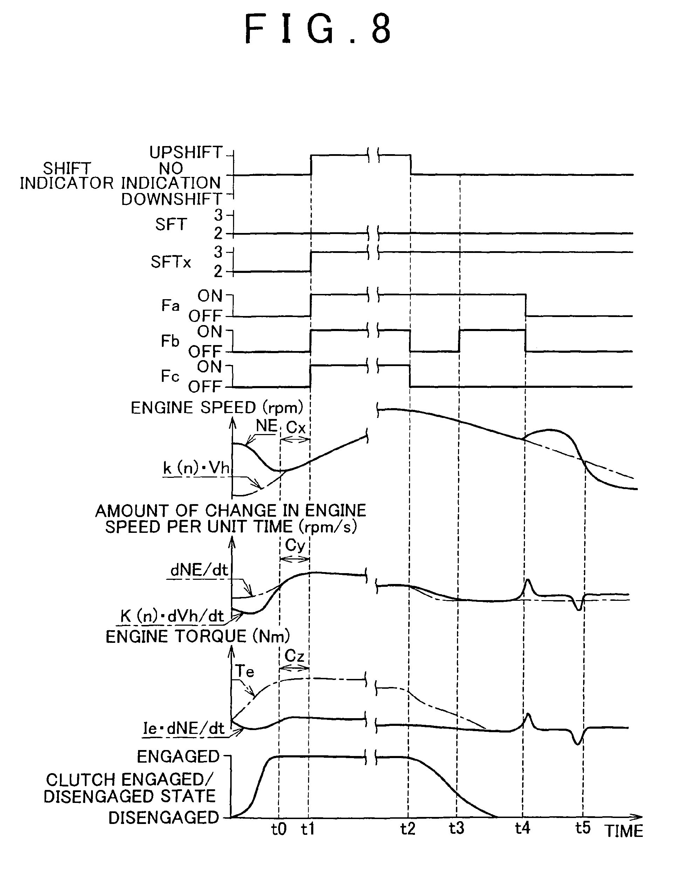

FIG. 8 is a timing chart showing an example of the control according to the embodiment. When the clutch 4 is completely engaged (t0), the equations 1 and 2 are satisfied, and the equation 3 is unsatisfied. Then, when the elapsed time counters Ca. Cb, and Cc indicate that the reference times Cx, Cy, and Cz have elapsed, respectively, all the gear determination flags Fa. Fb, and Fc are turned ON (t1). At this time, if the current gear SFT that is determined is the second gear, and the optimum gear SFTx that is determined is the third gear, the engine ECU 22 makes the shift indicator 38 indicate that the manual transmission 6 needs to upshift.

When the clutch 4 is brought from a completely engaged state to a semi-engaged state (after t2), the equation I may temporarily remain satisfied. However, the equation 2 is unsatisfied, and the equation 3 is satisfied (t2). Therefore, the engine ECU 22 can determine that the clutch 4 is not completely engaged. Thus, the engine ECU 22 does not determine the current gear SFT. Also, even when the clutch 4 is in the semi-engaged state, and the equations 1 and 2 are temporarily satisfied (t3 to t4), the equation 3 is satisfied. Therefore, the engine ECU 22 can determine that the clutch 4 is not completely engaged. Thus, the engine ECU 22 does not determine the current gear SFT.

Note that, the clutch 4 is disengaged, and the engine is idling during a period from t4 to t5. In this situation as well, the equation 3 is satisfied, regardless of whether the equations 1 and 2 are satisfied or unsatisfied. Therefore, the engine ECU 22 can determine that the clutch 4 is not completely engaged. Thus, the engine ECU 22 does not determine the current gear SFT.

In the above-described configuration, the clutch engaged state determination process A (FIG. 2) excluding steps S110 and S112 is regarded as the process executed by the equivalent ratio determination means. The clutch engaged state determination process B (FIG. 3) excluding steps S206 and S208 is regarded as the process executed by the per-unit-time change determination means. The clutch engaged state determination process C (FIG. 4) excluding steps S306 and S308 is regarded as the process executed by the engine output state determination means. Steps S110, S112, S206. S208, S306, and S308, and steps S404 to S408 of the gear determination process (FIG. 5) are regarded as the process executed by the clutch engaged state determination means. Step S410 is regarded as the process executed by the gear determination means. Steps S508, S510, and S514 of the shift indication process (FIG. 6) is regarded as the process executed by the shift necessity determination means. Steps S512, S516, and S518 are regarded as the process executed by the shift indication control means.

According to the first embodiment that has been described, the following advantageous effects are obtained.

(i) When the clutch 4 is engaged, the ratio (NE / Vh) of the engine speed NE to the rotational speed of the drive system or the physical quantity associated with the rotational speed of the drive system (i.e., the vehicle speed Vh in the embodiment) at each gear remains in the corresponding range (represented by the equation 1) for a certain time. Further, when the clutch 4 is engaged, the amount of change in the vehicle speed Vh per unit time is changed according to the amount of change in the engine speed NE per unit time (i.e., the equation 2 remains satisfied) for a certain time. Further, when the clutch 4 is engaged, the estimated engine output torque (Ie · dNE / dt), which is calculated based on the amount of change in the engine speed NE per unit time, remains far from the actual output torque (Te) (i.e., the equation 3 remains unsatisfied) for a certain time.

Accordingly, in the case where the equation 1 remains satisfied for a time longer than the reference time Cx, and the equation 2 remains satisfied for a time longer than the reference time Cy, and the equation 3 remains unsatisfied for a time longer than the reference time Cz, it is determined that the Clutch 4 is engaged, and the gear is determined (S410 in FIG. 5).

Thus, it is possible to continuously determine whether the clutch 4 is engaged, without using a clutch switch or a stroke sensor.

(ii) In the embodiment, the vehicle speed Vh is used as the physical quantity associated with the rotational speed of the drive system. Because the vehicle sensor 24 that detects the vehicle speed Vh is generally provided in the vehicle, it is possible to determine whether the clutch 4 is engaged without separately providing a special detection device. Accordingly, it is possible to continuously determine whether the clutch 4 is engaged using the simpler device.

(iii) It is determined that the gear, which is indicated by the value of the gear counter n at which the equation 1 is satisfied, is the current gear SFT. Therefore, it is possible to accurately determine the current gear SFT at an appropriate timing.

(iv) In the shift indication process (FIG. 6), when the current gear SFT does not match the optimum gear SFTx determined based on the operating state of the engine (the throttle-valve opening amount TA in the embodiment) and the traveling state of the vehicle (the vehicle speed Vh in the embodiment), the shift indicator 38 indicates that the manual transmission 6 needs to upshift or downshift. When the current gear SFT matches the optimum gear SFTx, the shift indicator 38 does not provide indication. Thus, it is possible to provide appropriate indication regarding the shift.

[Second embodiment]

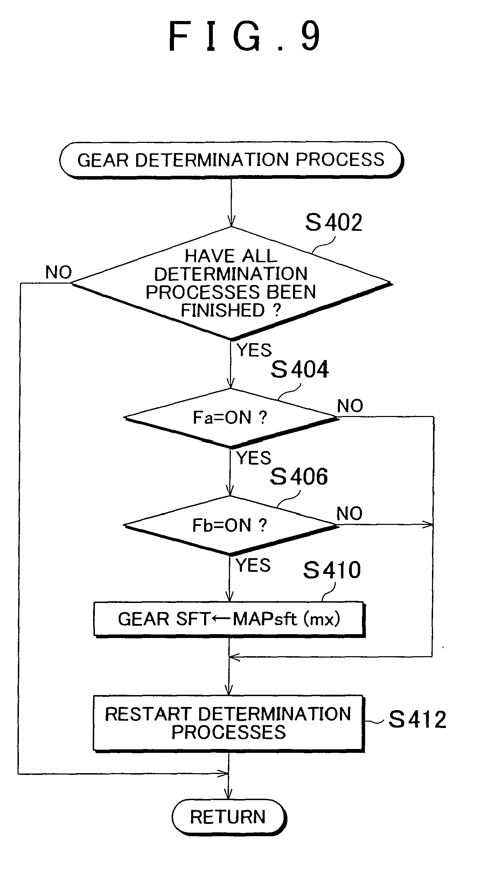

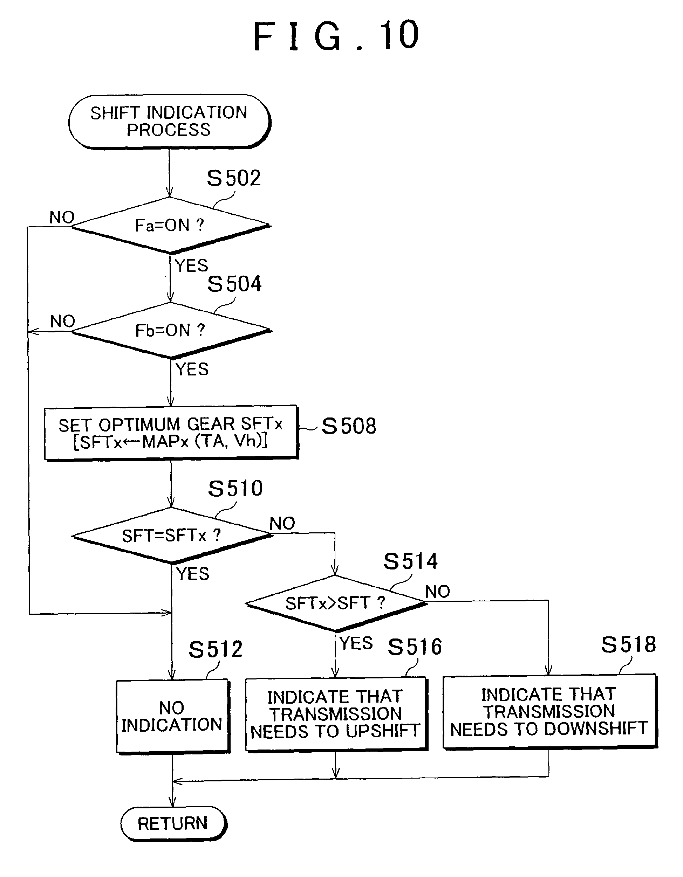

In a second embodiment, the engine ECU 22 does not execute the clutch engaged state determination process C (FIG 4), and executes the clutch engaged state determination processes A and B (FIG. 2 and FIG 3). Also, the engine ECU 22 executes the gear determination process according to a flowchart in FIG. 9 instead of the flowchart in FIG 5, and executes the shift indication process according to a flowchart in FIG. 10 instead of the flowchart in FIG 6.

The gear determination process (FIG 9) is the same as the gear determination process in FIG. 5, except that the determination in step S408 is omitted. The other steps arc the same as those in the gear determination process in FIG. 5. Therefore, the same steps are denoted by the same step numbers. The shift indication process (FIG. 10) is the same as the shift indication process in FIG. 6, except that the determination in step S506 is omitted. The other steps are the same as those in the shift indication process in FIG. 6. Therefore, the same steps are denoted by the same step numbers. The other portions of the configuration in the second embodiment are the same as those in the first embodiment. Therefore, the second embodiment will be described with reference to FIG. 1 to FIG. 3. and FIG 7.

In the second embodiment, when both of the equation 1 and the equation 2 are satisfied, the engine ECU 22 determines that the clutch 4 is engaged, and thus, the engine ECU 22 determines the current gear SFT (S410), and executes the shift indication process (FIG. 10) using the shift indicator 38.

Thus, in the control according to the second embodiment, the third gear determination flag Fc is not used, and the engine torque is not taken into account. However, other factors are changed in the substantially same manner as in the timing chart in FIG. 8. In the above-described configuration, the clutch engaged state determination process A (FIG 2) excluding steps S110 and S112 is regarded as the process executed by the equivalent ratio determination means. The clutch engaged state determination process B (FIG. 3) excluding steps S206 and S208 is regarded as the process executed by the per-unit-time change determination means. Steps S110, S112, S206, and S208, and Steps S404 and S406 of the gear determination process (FIG. 9) are regarded as the process executed by the clutch engaged state determination means. Step S410 is regarded as the process executed by the gear determination means. Steps S508, S510, and S514 of the shift indication process (FIG. 10) are regarded as the process executed by the shift necessity determination means. Steps S512, S516, and S518 are regarded as the process executed by the shift indication control means.

According to the second embodiment that has been described, the following advantageous effects are obtained.

(i) Because the determination based on the equation 3 is not performed, the determination accuracy is decreased. However, it is possible to obtain the substantially same advantageous effects as those obtained in the first embodiment, using the configuration that is simpler than the configuration in the first embodiment. Thus, it is possible to continuously determine whether the clutch 4 is engaged, without using a clutch switch or a stroke sensor. Accordingly, it is possible to accurately determine the current gear SFT. and to provide appropriate indication regarding the shift to the driver.

[Third embodiment]

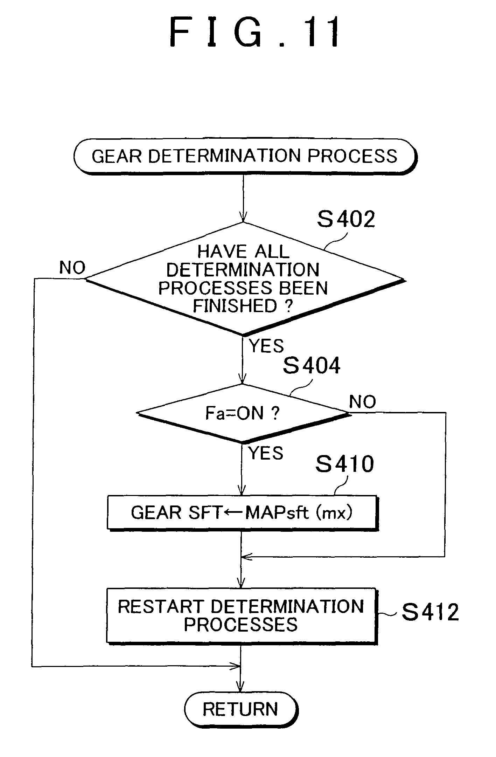

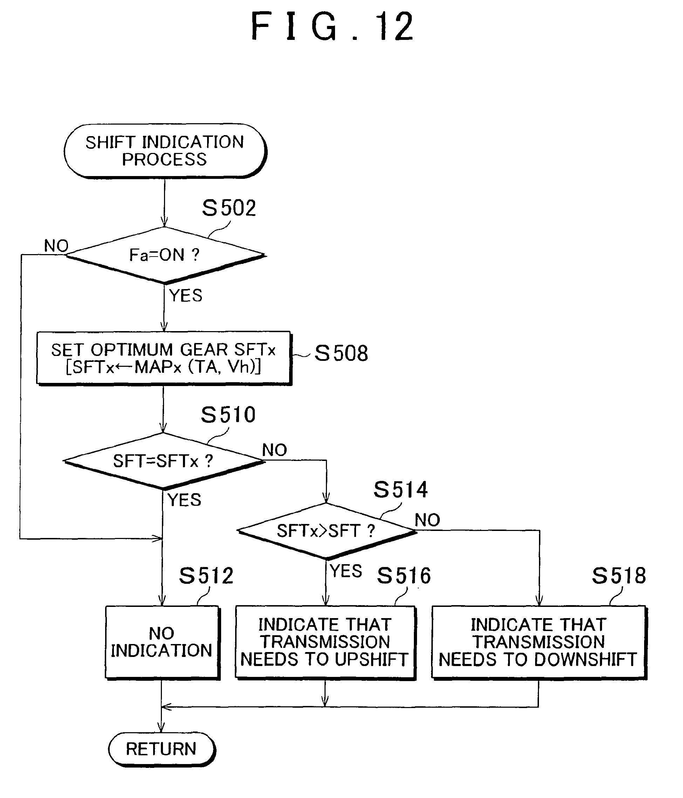

In a third embodiment, the engine ECU 22 does not execute the clutch engaged state determination processes B and C (FIG. 3 and FIG. 4), and executes the clutch engaged state determination process A (FIG. 2). Also, the engine ECU 22 executes the gear determination process according to a flowchart in FIG. 11 instead of the flowchart in FIG. 5, and executes the shift indication process according to a flowchart in FIG. 12 instead of the flowchart in FIG. 6.

The gear determination process (FIG. 11) is the same as the gear determination process in FIG. 5, except that the determinations in steps S406 and S408 are omitted. The other steps are the same as those in the gear determination process in FIG. 5. Therefore, the same steps are denoted by the same step numbers. The shift indication process (FIG. 12) is the same as the shift indication process in FIG. 6, except that the determinations in steps S504 and S506 are omitted. The other steps are the same as those in the shift indication process in FIG. 6. Therefore, the same steps are denoted by the same step numbers. The other portions of the configuration in the third embodiment are the same as those in the first embodiment. Therefore, the third embodiment will be described with reference to FIG 1, FIG 2, and FIG. 7.

In the third embodiment, when only the equation 1 is satisfied, the engine ECU 22 determines that the clutch 4 is engaged, and thus, the engine ECU 22 determines the current gear SFT (S410), and executes the shift indication process (FIG. 12) using the shift indicator 38.

Thus, in the control according to the third embodiment, the second gear determination flag Fb and the third gear determination flag Fc are not used, and the amount of change in the engine speed per unit time, and the engine torque are not taken into account. However, other factors are changed in the substantially same manner as in the timing chart in FIG. 8.

In the above-described configuration, the clutch engaged state determination process A (FIG. 2) excluding steps S110 and S112 is regarded as the process executed by the equivalent ratio determination means. Steps S 110 and S 112. and step S404 of the gear determination process (FIG. 11) are regarded as the process executed by the clutch engaged state determination means. Step S410 is regarded as the process executed by the gear determination means. Steps S508, S510, and S514 of the shift indication process (FIG. 12) are regarded as the process executed by the shift necessity determination means. Steps S512, S516, and S518 are regarded as the process executed by the shift indication control means.

According to the third embodiment that has been described, the following advantageous effects are obtained.

(i) Because the determinations based on the equations 2 and 3 are not performed, the determination accuracy is decreased. However, it is possible to obtain the advantageous effects that are close to the advantageous effects obtained in the first embodiment, using the configuration that is simpler than the configuration in the first embodiment. Thus, it is possible to continuously determine whether the clutch 4 is engaged, without using a clutch switch or a stroke sensor. Accordingly, it is possible to accurately determine the current gear SFT, and to provide appropriate indication regarding the shift to the driver.

[Other embodiments]

(a) The equation 1 is used to determine the relation between the ratio NVR (= engine speed NE / vehicle speed Vh) and the ratio K (n) that is the ratio of the engine speed to the vehicle speed at the gear indicated by the value of the gear counter n. However, in the case where the rotational speed of the output shaft 8 of the manual transmission 6 is detected, the rotational speed of the output shaft 8 may be used, instead of the vehicle speed Vh.

(b) Only the clutch engaged state determination processes A and C (FIG. 2 and FIG. 4) may be executed without executing the clutch engaged state determination process B (FIG. 3), and steps S406 of the gear determination process in FIG. 5 and step S504 of the shift indication process in FIG. 6 may be omitted, In this case, because the determination based on the equation 2 is not performed, the determination accuracy is decreased. However, it is possible to obtain the substantially same advantageous effects as those obtained in the first embodiment, using the configuration that is simpler than the configuration in the first embodiment.

(c) Only the clutch engaged state determination processes B and C (FIG. 3 and FIG. 4; the equations 2 and 3) may be executed, without executing the clutch engaged state determination process A (FIG. 2). When it is determined whether the clutch 4 is engaged in this case, because the determination based on the equation 1 is not performed, the determination accuracy is decreased. However, it is possible to determine whether the clutch 4 is engaged, using the configuration that is simpler than the configuration in the first embodiment.

Also, the clutch engaged state determination processes B and C (FIG. 3 and FIG. 4) may be executed to determine whether the clutch 4 is engaged, and further, the clutch engaged state determination process A (FIG. 2) may be executed in the shift indication process (FIG. 6). In this case, when the gear determination flag Fa is ON, the current gear SFT may be determined by executing the same step as step S410 in FIG. 5, and the current gear SFT may be compared with the optimum gear SFTx. In the above-described configuration, it is possible to obtain the same advantageous effects as those obtained in the first embodiment.

(d) Only the clutch engaged state determination process B (FIG. 3; the equation 2) may be executed to determine whether the clutch 4 is engaged. In this case, because the determinations based on the equations I and 3 are not performed, the determination accuracy is decreased. However, it is possible to determine whether the clutch 4 is engaged, using the configuration that is simpler than the configuration in the first embodiment.

Further, the clutch engaged state determination process A (FIG. 2) may be executed in the shift indication process (FIG. 6) as described in the section (c). In this case, it is possible to obtain the same advantageous effects as those obtained in the first embodiment.

**Claims**

1. A clutch engaged state determination apparatus that determines whether a clutch (4) is engaged, wherein the clutch (4) is disposed between an engine (2) and a drive system including a transmission (6), and allows/interrupts transmission of power between the engine (2) and the drive system, **characterized by** comprising:

engine speed detection means for detecting an actual engine speed of the engine (2);
drive system rotational state detection means for detecting an actual rotational speed of the drive system at an output side of the transmission (6), or an actual physical quantity associated with the actual rotational speed; and clutch engaged state determination means for determining whether the clutch (4) is engaged, based on the actual engine speed detected by the engine speed detection means, and the actual rotational speed of the drive system or the actual physical quantity detected by the drive system rotational state detection means.

2. The clutch engaged state determination apparatus according to claim 1. **characterized by** further comprising:

equivalent ratio determination means for determining a pre-calculated ratio between an engine speed and a rotational speed of the drive system at the output side of the transmission (6) or a physical quantity associated with the rotational speed at one of gears of the transmission (6), which is substantially equivalent to a ratio between the actual engine speed detected by the engine speed detection means and the actual rotational speed of the drive system or the actual physical quantity detected by the drive system rotational state detection means, among pre-calculated ratios between engine speeds and rotational speeds of the drive system or physical quantities associated with the rotational speeds at the respective gears of the transmission (6), wherein:

the clutch engaged state determination means determines that the clutch (4) is engaged, when the equivalent ratio determination means continues to determine, for a first reference time, that the ratio between the actual engine speed and the actual rotational speed or the actual physical quantity is substantially equivalent to the pre-calculated ratio at the one of the gears.

3. The clutch engaged state determination apparatus according to claim 2, **characterized by** further comprising:

per-unit-time change determination means for determining whether an amount of change in the actual rotational speed of the drive system or the actual physical quantity detected by the drive system rotational state detection means per unit time is changed according to an amount of change in the actual engine speed detected by the engine speed detection means per unit time, wherein:

the clutch engaged state determination means determines that the clutch is engaged, when the equivalent ratio determination means continues to determine, for the first reference time, that the ratio between the actual engine speed and the actual rotational speed or the actual physical quantity is substantially equivalent to the pre-calculated ratio at the one of the gears, and the per-unit-time change determination means continues to determine, for a second reference time, that the amount of change in the actual rotational speed of the drive system or the actual physical quantity per unit time is changed according to the amount of change in the actual engine speed per unit time.

4. The clutch engaged state determination apparatus according to claim 3, **characterized by** further comprising:

engine output state determination means for determining whether estimated engine output torque, which is calculated based on the amount of change in the actual engine speed detected by the engine speed detection means per unit time on an assumption that engine output torque is not transmitted to the drive system, is far from actual output torque that is actually generated by the engine (2), wherein:

the clutch engaged state determination means determines that the clutch (4) is engaged, when the equivalent ratio determination means continues to determine, for the first reference time, that the ratio between the actual engine speed and the actual rotational speed or the actual physical quantity is substantially equivalent to the pre-calculated ratio at the one of the gears, the per-unit-time change determination means continues to determine, for the second reference time, that the amount of change in the actual rotational speed of the drive system or the actual physical quantity per unit time is changed according to the amount of change in the actual engine speed per unit time, and the engine output state determination means continues to determine, for a third reference time, that the estimated engine output torque is far from the actual output torque.

5. The clutch engaged state determination apparatus according to claim 2, **characterized by** further comprising:

engine output state determination means for determining whether estimated engine output torque, which is calculated based on the amount of change in the actual engine speed detected by the engine speed detection means per unit time on an assumption that engine output torque is not transmitted to the drive system, is far from actual output torque that is actually generated by the engine (2), wherein:

the clutch engaged state determination means determines that the clutch (4) is engaged, when the equivalent ratio determination means continues to determine, for the first reference time, that the ratio between the actual engine speed and the actual rotational speed or the actual physical quantity is substantially equivalent to the pre-calculated ratio at the one of the gears, and the engine output state determination means continues to determine, for a third reference time, that the estimated engine output torque is far from the actual output torque.

6. The clutch engaged state determination apparatus according to claim 1, **characterized by** further comprising:

per-unit-time change determination means for determining whether an amount of change in the actual rotational speed of the drive system or the actual physical quantity detected by the drive system rotational state detection means per unit time is changed according to an amount of change in the actual engine speed detected by the engine speed detection means per unit time, wherein:

the clutch engaged state determination means determines that the clutch (4) is engaged, when the per-unit-time change determination means continues to determine, for a second reference time, that the amount of change in the actual rotational speed of the drive system or the actual physical quantity per unit time is changed according to the amount of change in the actual engine speed per unit time.

7. The clutch engaged state determination apparatus according to claim 6, **characterized by** further comprising:

engine output state determination means for determining whether estimated engine output torque, which is calculated based on the amount of change in the actual engine speed detected by the engine speed detection means per unit time on an assumption that engine output torque is not transmitted to the drive system, is far from actual output torque that is actually generated by the engine (2), wherein:

the clutch engaged state determination means determines that the clutch (4) is engaged, when the per-unit-time change determination means continues to determine, for the second reference time, that the amount of change in the actual rotational speed of the drive system or the actual physical quantity per unit time is changed according to the amount of change in the actual engine speed per unit time, and the engine output state determination means continues to determine, for a third reference time, that the estimated engine output torque is far from the actual output torque.

**8.** The clutch engaged state determination apparatus according to any one of claims 1 to 7, **characterized in that**:

the engine (2) is provided in a vehicle to drive the vehicle via the drive system; and
the drive system rotational state detection means detects a traveling speed of the vehicle as the physical quantity.

**9.** The clutch engaged state determination apparatus according to any one of claims l to 8, **characterized in that** the transmission (6) is a gear type manual transmission.

**10.** A gear determination apparatus **characterized by** comprising:

the clutch engaged state determination apparatus according to any one of claims 2 to 5; and
gear determination means for determining that a current gear of the transmission (6) is the one of the gears corresponding to the pre-calculated ratio that is determined to be substantially equivalent to the ratio between the actual engine speed and the actual rotational speed or the actual physical quantity by the equivalent ratio determination means, when the clutch engaged state determination means of the clutch engaged state determination apparatus determines that the clutch (4) is engaged.

**11.** A gear determination apparatus **characterized by** comprising:

the clutch engaged state determination apparatus according to claim 6 or 7;
equivalent ratio determination means for determining a pre-calculated ratio between an engine speed and a rotational speed of the drive system at the output side of the transmission (6) or a physical quantity associated with the rotational speed at one of gears of the transmission (6), which is substantially equivalent to a ratio between the actual engine speed detected by the engine speed detection means and the actual rotational speed of the drive system or the actual physical quantity detected by the drive system rotational state detection means, among pre-calculated ratios between engine speeds and rotational speeds of the drive system or physical quantities associated with the rotational speeds at the respective gears of the transmission (6); and
gear determination means for determining that a current gear of the transmission (6) is the one of the gears corresponding to the pre-calculated ratio that is determined to be substantially equivalent to the ratio between the actual engine speed and the actual rotational speed or the actual physical quantity by the equivalent ratio determination means, when the clutch engaged state determination means of the clutch engaged state determination apparatus determines that the clutch (4) is engaged.

**12.** The gear determination apparatus according to claim 10 or 11, **characterized in that**:

the engine (2) is provided in a vehicle to drive the vehicle via the drive system; and
the drive system rotational state detection means detects a traveling speed of the vehicle as the physical quantity.

**13.** The gear determination apparatus according to any one of claims 10 to 12, **characterized in that** the transmission is a gear type manual transmission.

**14.** A shift indication apparatus, **characterized by** comprising:

the gear determination apparatus according to any one of claims 10 to 13;
an engine operating state detection means for detecting an operating state of the engine (2);
a vehicle traveling state detection means for detecting a traveling state of a vehicle;
shift necessity determination means for determining whether the transmission (6) needs to shift, based on the current gear determined by the gear determination means, the operating state of the engine (2) detected by the engine operating state detection means, and the traveling state of the vehicle detected by the vehicle traveling state detection means; and
shift indication control means for executing a control to indicate that the transmission (6) needs to shift, when the shift necessity determination means determines that the transmission (6) needs to shift.

**15.** A clutch engaged state determination method that determines whether a clutch (4) is engaged, wherein the clutch (4) is disposed between an engine (2) and a drive system including a transmission (6), and allows/interrupts transmission of power between the engine (2) and the drive system, **characterized by** comprising:

detecting an actual engine speed of the engine (2);
detecting an actual rotational speed of the drive system at an output side of the transmission (6), or an actual physical quantity associated with the actual rotational speed; and
determining whether the clutch (4) is engaged, based on the detected actual engine speed, and the detected actual rotational speed of the drive system or the detected actual physical quantity.

16. The clutch engaged state determination method according to claim 15, **characterized by** further comprising:

determining a pre-calculated ratio between an engine speed and a rotational speed of the drive system or a physical quantity associated with the rotational speed at one of gears of the transmission (6), which is substantially equivalent to a ratio between the detected actual engine speed and the detected actual rotational speed of the drive system or the detected actual physical quantity, among pre-calculated ratios between engine speeds and rotational speeds of the drive system or physical quantities associated with the rotational speeds at the respective gears of the transmission (6), wherein:

it is determined that the clutch (4) is engaged, when it remains determined, for a first reference time, that the ratio between the actual engine speed and the actual rotational speed or the actual physical quantity is substantially equivalent to the pre-calculated ratio at the one of the gears.

17. The clutch engaged state determination method according to claim 16, **characterized by** further comprising:

determining whether an amount of change in the detected actual rotational speed of the drive system or the detected actual physical quantity per unit time is changed according to an amount of change in the detected actual engine speed per unit time, wherein:

it is determined that the clutch (4) is engaged, when it remains determined, for the first reference time, that the ratio between the actual engine speed and the actual rotational speed or the actual physical quantity is substantially equivalent to the pre-calculated ratio at the one of the gears, and it remains determined, for a second reference time, that the amount of change in the actual rotational speed of the drive system or the actual physical quantity per unit time is changed according to the amount of change in the actual engine speed per unit time.

18. The clutch engaged state determination method according to claim 17, **characterized by** further comprising:

determining whether estimated engine output torque, which is calculated based on the amount of change in the detected actual engine speed per unit time on an assumption that engine output torque is not transmitted to the drive system, is far from actual output torque that is actually generated by the engine (2), wherein:

it is determined that the clutch (4) is engaged, when it remains determined, for the first reference time, that the ratio between the actual engine speed and the actual rotational speed or the actual physical quantity is substantially equivalent to the pre-calculated ratio at the one of the gears, it remains determined, for the second reference time, that the amount of change in the actual rotational speed of the drive system or the actual physical quantity per unit time is changed according to the amount of change in the actual engine speed per unit time, and it remains determined, for a third reference time, that the estimated engine output torque is far from the actual output torque.

19. The clutch engaged state determination method according to claim 16, **characterized by** further comprising:

determining whether estimated engine output torque, which is calculated based on the amount of change in the detected actual engine speed per unit time on an assumption that engine output torque is not transmitted to the drive system, is far from actual output torque that is actually generated by the engine (2), wherein:

it is determined that the clutch (4) is engaged, when it remains determined, for the first reference time, that the ratio between the actual engine speed and the actual rotational speed or the actual physical quantity is substantially equivalent to the pre-calculated ratio at the one of the gears, and it remains determined, for a third reference time, that the estimated engine output torque is far from the actual output torque.

20. The clutch engaged state determination method according to claim 15, **characterized by** further comprising:

determining whether an amount of change in the detected actual rotational speed of the drive system or the detected actual physical quantity per unit time is changed according to an amount of change in the detected actual engine speed per unit time, wherein:

it is determined that the clutch (4) is engaged, when it remains determined, for a second reference time, that the amount of change in the actual rotational speed of the drive system or the actual physical quantity per unit time is changed according to the amount of change in the actual engine speed per unit time.

21. The clutch engaged state determination method according to claim 20, **characterized by** further comprising:

determining whether estimated engine output torque, which is calculated based on the amount of change in the detected actual engine speed per unit time on an assumption that engine output torque is not transmitted to the drive system, is far from actual output torque that is actually generated by the engine (2), wherein:

it is determined that the clutch (4) is engaged, when it remains determined, for the second reference time, that the amount of change in the actual rotational speed of the drive system or the actual physical quantity per unit time is changed according to the amount of change in the actual engine speed per unit time, and it remains determined, for a third reference time, that the estimated engine output torque is far from the actual output torque.

# FIG.1

EP 1 950 461 A2

INTAKE AIR
TEMPERATURE SENSOR — 26

THW — COOLANT TEMPERATURE SENSOR

A/F — AIR-FUEL RATIO SENSOR

VEHICLE
SPEED SENSOR — 24

Vh

ACCP — ACCELERATOR-PEDAL
OPERATION AMOUNT SENSOR

32 30 28

TA

GA

ENGINE ECU

22

10

12  15  16

36

FUEL
INJECTION
VALVE

NE — ENGINE
SPEED SENSOR — 34

14

38 — SHIFT
INDICATOR

OTHER SENSORS AND SWITCHES

2  4  6  20

8

ENGINE

CLUTCH

MANUAL
TRANSMISSION

2a

18

# FIG. 2

```
      ┌──────────────────────────────┐
      │    CLUTCH ENGAGED STATE      │
      │   DETERMINATION PROCESS A    │
      └──────────────────────────────┘
                    │
                    ▼  S102
```

$A \cdot K(n) \leq NVR \leq B \cdot K(n)$ ?

NO

YES

S110

Ca>Cx?

NO

S104

n = MAXIMUM VALUE ?

NO

YES   S108

S106

S112

Ca←Ca+1

Fa←ON  — S114

Fa←OFF

n←n+1

mx←n  — S116

n←1
Ca←0  — S118

STOP CLUTCH ENGAGED STATE
DETERMINATION PROCESS A  — S120

RETURN

# F I G . 3

```
     CLUTCH ENGAGED STATE
   DETERMINATION PROCESS B

                    S202

    D·dNE/dt≤K (n)·dVh/dt≤E·dNE/dt     NO
                  ?

                  YES

                         S206

    NO       Cb>Cy?

         YES                              S204
  S208

  Cb←Cb+1      Fb←ON    S210      Fb←OFF

                  Cb←0    S212

       STOP CLUTCH ENGAGED STATE     S214
       DETERMINATION PROCESS B

                  RETURN
```

# FIG.4

# F I G . 5

```
        ┌─────────────────────────────────┐
        │   GEAR DETERMINATION PROCESS    │
        └─────────────────────────────────┘
                        │
                        ▼                S402
              ◇ HAVE ALL
    NO ◄───────  DETERMINATION
              PROCESSES BEEN
              FINISHED ? ◇
                   │ YES       S404
                   ▼
              ◇ Fa=ON ? ◇ ──── NO ────┐
                   │ YES       S406    │
                   ▼                   │
              ◇ Fb=ON ? ◇ ──── NO ───►│
                   │ YES       S408    │
                   ▼                   │
              ◇ Fc=ON ? ◇ ──── NO ───►│
                   │ YES               │
                   ▼         S410      │
        ┌─────────────────────────┐   │
        │ GEAR SFT←MAPsft (mx)    │   │
        └─────────────────────────┘   │
                   │ ◄─────────────────┘
                   ▼
        ┌─────────────────────────┐
        │ RESTART DETERMINATION   │ ─ S412
        │       PROCESSES         │
        └─────────────────────────┘
                   │
                   ▼
              ┌──────────┐
              │  RETURN  │
              └──────────┘
```

# F I G . 6

SHIFT INDICATION
PROCESS

S502

Fa=ON ?  NO

YES  S504

Fb=ON ?  NO

YES  S506

Fc=ON ?  NO

YES

SET OPTIMUM GEAR SFTx
[SFTx←MAPx (TA, Vh)]  S508

S510

SFT=SFTx ?  NO

YES  S514

SFTx>SFT ?  NO

YES  S516

S512  S518

NO
INDICATION

INDICATE THAT
TRANSMISSION
NEEDS TO UPSHIFT

INDICATE THAT
TRANSMISSION
NEEDS TO DOWNSHIFT

RETURN

# F I G . 7

[MAPx]

THROTTLE-VALVE
OPENING AMOUNT TA (%)

FIRST
GEAR

SECOND
GEAR

THIRD
GEAR

FOURTH
GEAR

FIFTH
GEAR

0

0

VEHICLE SPEED Vh (km/ h)

# FIG.8

# F I G . 9

```
( GEAR DETERMINATION PROCESS )
                    |
                    v            S402
              HAVE ALL
              DETERMINATION
    NO ←──    PROCESSES BEEN
              FINISHED ?
                    | YES
                    v            S404
    ←── Fa=ON ?  ── NO ──→
                    | YES
                    v            S406
    ←── Fb=ON ?  ── NO ──→
                    | YES        S410
                    v
         GEAR SFT←MAPsft (mx)
                    |
                    v
         RESTART DETERMINATION   ── S412
              PROCESSES
                    |
                    v
              ( RETURN )
```

# FIG.10

```
         ┌──────────────────────┐
         │  SHIFT INDICATION    │
         │      PROCESS         │
         └──────────────────────┘
                    │
                    ▼        S502
  NO         ◇─────────────◇
◀────────────    Fa=ON ?
             ◇─────────────◇
                    │ YES
                    │      S504
  NO         ◇─────────────◇
◀────────────    Fb=ON ?
             ◇─────────────◇
                    │ YES
                    ▼
         ┌──────────────────────┐
         │ SET OPTIMUM GEAR SFTx │ ── S508
         │ [SFTx←MAPx (TA, Vh)]  │
         └──────────────────────┘
                    │
                    ▼        S510
             ◇─────────────◇        NO
             ◇ SFT=SFTx ? ◇───────────────┐
             ◇─────────────◇               │
                    │ YES                  ▼        S514
                    │                ◇─────────────◇        NO
                    │                ◇ SFTx>SFT ? ◇────────────────┐
                    │                ◇─────────────◇                │
                    │                      │ YES                    │
         S512       │              S516    │              S518      │
                    ▼                      ▼                        ▼
         ┌──────────────┐   ┌──────────────────┐   ┌──────────────────┐
         │     NO       │   │  INDICATE THAT   │   │  INDICATE THAT   │
         │  INDICATION  │   │  TRANSMISSION    │   │  TRANSMISSION    │
         │              │   │ NEEDS TO UPSHIFT │   │NEEDS TO DOWNSHIFT│
         └──────────────┘   └──────────────────┘   └──────────────────┘
                    │                │                        │
                    ▼◀───────────────┴────────────────────────┘
         ┌──────────────┐
         │    RETURN     │
         └──────────────┘
```

# FIG.11

```
      ( GEAR DETERMINATION PROCESS )
                    │
                    │         S402
                    ▼
              ╱ HAVE ALL ╲
   NO       ╱ DETERMINATION ╲
 ◄────────┤ PROCESSES BEEN  ├
           ╲   FINISHED ?  ╱
              ╲         ╱
                  │ YES
                  │      S404
                  ▼
              ╱         ╲      NO
             ╱  Fa=ON ?  ╲ ─────────┐
             ╲           ╱           │
                  │ YES              │
                  │     S410         │
                  ▼                  │
     ┌────────────────────────┐      │
     │ GEAR SFT ← MAPsft (mx) │      │
     └────────────────────────┘      │
                  │ ◄────────────────┘
                  ▼
     ┌────────────────────────┐
     │ RESTART DETERMINATION  │   S412
     │       PROCESSES        │
     └────────────────────────┘
                  │
                  ▼
           (    RETURN    )
```

# FIG.12

SHIFT INDICATION
PROCESS

S502

NO ← Fa=ON ?

YES

SET OPTIMUM GEAR SFTx
[SFTx←MAPx (TA, Vh)] — S508

S510

SFT=SFTx ?     NO

YES

S514

SFTx>SFT ?     NO

YES    S516              S518

S512

| NO INDICATION | INDICATE THAT TRANSMISSION NEEDS TO UPSHIFT | INDICATE THAT TRANSMISSION NEEDS TO DOWNSHIFT |

RETURN

## EP 1 950 461 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002266895 A
- JP 2003278806 A
- JP 2005195170 A
- WO 2002266895 A
- WO 2003278806 A
- WO 2005195170 A